# EUROPEAN PATENT APPLICATION

(11) **EP 4 711 754 A1**
(43) Date of publication of application: **18.03.2026**
(21) Application number: 23936553.9
(22) Date of filing: 09.05.2023
(51) Int. Cl.: G01N 27/447

(54) **ELECTROPHORESIS DEVICE AND ELECTROPHORESIS METHOD**

(71) Applicant: HITACHI HIGH-TECH CORPORATION, Tokyo 105-6409 (JP)
(72) Inventor: MANRI, Chihiro, Tokyo 100-8280 (JP); YOKOI, Takahide, Tokyo 100-8280 (JP); OGAWA, Mima, Tokyo 100-8280 (JP)
(74) Representative: MERH-IP Matias Erny Reichl Hoffmann Patentanwälte PartG mbB
(86) International application number: PCT/JP2023/017368
(87) International publication number: WO 2024/231999

(57) **Abstract**

Air bubbles generated by a second electrode 4b on a lower side are prevented from entering a first gel flow path 2. An electrophoresis device 1, used for vertical electrophoresis in which a first electrode 4a as a cathode and the second electrode 4b as an anode are provided and the first electrode 4a is disposed on an upper side and the second electrode 4b is disposed on a lower side, includes: a buffer solution tank 5 into which a sample is introduced and in which the first electrode 4a is provided; the first gel flow path 2 connected to the buffer solution tank 5 and filled with a gel; and a second gel flow path 3 connected to the first gel flow path 2 and filled with a gel, the second electrode 3 being provided in the first electrode 4a, in which the second electrode 4b is provided in the second gel flow path 3 at a position different from a position on an axis of the first gel flow path 2.

## Description

### Technical Field

The present disclosure relates to an electrophoresis device and an electrophoresis method.

### Background Art

A gel electrophoresis method is known in which biological substances such as nucleic acids or proteins are analyzed using a phenomenon that when an electric field is applied to a substance having charges, the substance moves in an electrode direction having an opposite polarity. In general, an electrophoresis gel such as an agarose gel or an acrylamide gel is used as a support for the biological substance. Since a moving speed in the electrophoresis gel differs depending on molecular weights of the biological substances, the biological substances are separated as bands that differ for the molecular weights. Since the gel electrophoresis method has a high resolution regarding the separation of biological substances, it is also used to measure a fragment length of DNA and grasp a state of a sample. It is also used to quantify DNA of a specific length by fluorescently labeling DNA and observing a luminance thereof.

As the widely used electrophoresis, disk gel electrophoresis using a glass tube, slab gel electrophoresis using a flat plate, submarine electrophoresis in which electrophoresis is performed horizontally, and the like are known, and all of them are open-type electrophoresis.

PTL 1 discloses a sealed electrophoresis device in which a gel and a buffer solution are sealed.

Regarding the electrophoresis method, in the submarine electrophoresis, a sample is applied to a structure for receiving the sample, which is referred to as a well. At this time, there is a problem that the sample is diffused into a well, a buffer solution tank, or the like, the band is not sharp, and a separation capability is deteriorated. Therefore, in order to ensure the separation capability, the sealed electrophoresis device employs vertical electrophoresis instead of horizontal electrophoresis.

### Citation List

### Patent Literature

PTL 1: US Patent No. 8124029

### Summary of Invention

### Technical Problem

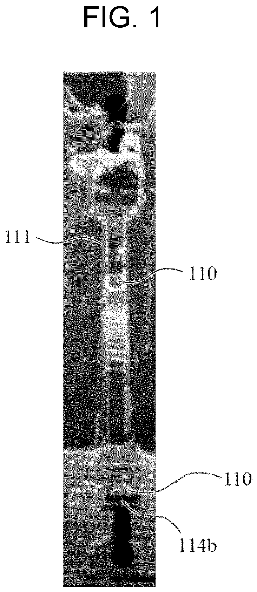

However, in the case of the vertical electrophoresis, as shown in FIG. 1, it was found that air bubbles 110 generated by a lower electrode 114b due to electrolysis rise, and thus the air bubbles 110 enter a flow path 111, which hinders energization, and may cause a phoresis failure.

In the case of the above-described open-type electrophoresis, air bubbles generated during energization are not problematic. However, in the case of the vertical electrophoresis, there is a problem that the air bubbles 110 generated by the lower electrode 114b enter the flow path 111. Since the air bubbles 110 are generated by the electrolysis of the electrophoresis, it is difficult to avoid the generation of the air bubbles itself.

Therefore, an object of the present disclosure is to provide an electrophoresis device and an electrophoresis method capable of preventing air bubbles generated by a lower electrode from entering a flow path.

### Solution to Problem

In order to solve the above problems, according to the present disclosure, there is provided an electrophoresis device used for vertical electrophoresis in which a first electrode as a cathode and a second electrode as an anode are provided and the first electrode is disposed on an upper side and the second electrode is disposed on a lower side, and the electrophoresis device includes: a solution tank into which a sample is introduced and in which the first electrode is provided; a first gel flow path configured to be connected to the solution tank and filled with a gel; and a second gel flow path configured to be connected to the first gel flow path and filled with a gel, the second electrode being provided in the second gel flow path, in which the second electrode is provided in the second gel flow path at a position different from a position on an axis of the first gel flow path.

In addition, an electrophoresis device of the present disclosure is an electrophoresis device used for vertical electrophoresis in which a first electrode as a cathode and a second electrode as an anode are provided and the first electrode is disposed on an upper side and the second electrode is disposed on a lower side, and includes: a solution tank into which a sample is introduced and in which the first electrode is provided; a first gel flow path configured to be connected to the solution tank and filled with a gel; a second gel flow path configured to be connected to the first gel flow path and filled with a gel, the second electrode being provided in the second gel flow path; and a connection portion configured to be connected to a side surface of the second gel flow path, and connect the first gel flow path to the second gel flow path, in which the second gel flow path includes a protrusion protruding upward from the connection portion.

In addition, an electrophoresis method of the present disclosure includes: vertically providing an electrophoresis device such that a first electrode is disposed on an upper side and a second electrode is disposed on a lower side, the electrophoresis device including a solution tank provided with the first electrode, a first gel flow path configured to be connected to the solution tank and filled with a gel, a second gel flow path configured to be connected to the first gel flow path and filled with a gel, the second electrode being provided in the second gel flow path, and a connection portion configured to be connected to a side surface of the second gel flow path, and connect the first gel flow path to the second gel flow path, and the second gel flow path including a protrusion protruding upward from the connection portion, and the electrophoresis device is vertically provided such that the first electrode is positioned at the top and the second electrode at the bottom; introducing a sample into the solution tank; and applying a voltage to the first electrode as a cathode and the second electrode as an anode to cause electrophoresis of the sample in the gel of the first gel flow path.

### Advantageous Effects of Invention

According to the electrophoresis device and the electrophoresis method of the present disclosure, it is possible to prevent air bubbles generated by energization from entering a flow path.

### Brief Description of Drawings

[FIG. 1] FIG. 1 is a diagram showing an example in which an electrophoresis failure occurs due to air bubbles in an electrophoresis device in the related art.
[FIG. 2] FIG. 2 is a diagram showing a configuration of an electrophoresis device 1 of Embodiment 1.
[FIG. 3] FIG. 3 is a diagram showing a configuration of the electrophoresis device 1 of Embodiment 2.
[FIG. 4] FIG. 4 is a diagram showing a configuration of the electrophoresis device 1 of Embodiment 3.
[FIG. 5] FIG. 5 is a diagram showing an arrangement example of electrodes according to the embodiment.
[FIG. 6A] FIG. 6A is a diagram showing a configuration of the electrophoresis device 1 of Embodiment 4.
[FIG. 6B] FIG. 6B is a diagram showing a configuration of another electrophoresis device 1 of Embodiment 4.
[FIG. 7] FIG. 7 shows a flow path device 100 in which a plurality of electrophoresis devices 1 are provided.
[FIG. 8] FIG. 8 is a diagram showing an effect of preventing air bubbles from entering a flow path in the electrophoresis device 1 according to the embodiment.

### Description of Embodiments

In all drawings for showing the embodiments, components having the same functions are denoted by the same reference signs, and repeated description thereof may be omitted. The invention is not to be construed as being limited to the description of the embodiments to be described below. Although the invention is defined by the appended scope of the claims, it will be easily understood by those skilled in the art that the specific configuration can be changed within a range not departing from the idea or spirit of the invention.

In order to facilitate understanding of the invention, the position, size, shape, range, or the like of each configuration shown in the drawings or the like may not represent the actual position, size, shape, range, or the like. Therefore, the invention is not necessarily limited to the position, size, shape, range, or the like disclosed in the drawings.

In the present specification, a component represented in a single form includes a plurality of forms unless otherwise clearly described in the context.

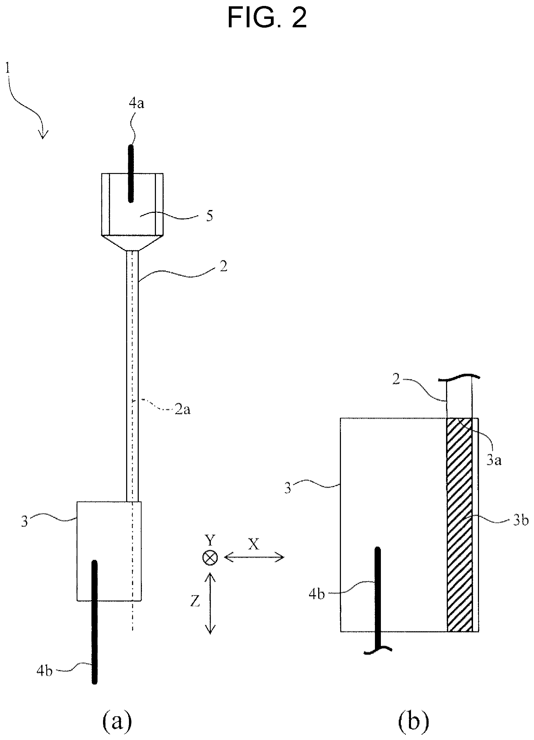

An electrophoresis device 1 according to embodiments of the present disclosure will be described with reference to FIGS. 2 to 8. FIGS. 2 to 8 are diagrams showing configurations of the electrophoresis device 1 according to the embodiments.

The electrophoresis device 1 includes an upper first electrode 4a and a lower second electrode 4b for applying a voltage. A power supply (not shown) is connected to the first electrode 4a and the second electrode 4b, so that a voltage can be applied between the pair of electrodes 4a and 4b. Although not shown, a voltage control device that controls an operation of the power supply may be connected to the power supply. The electrophoresis device 1 according to the embodiment is an electrophoresis device used for vertical electrophoresis in which the first electrode 4a is disposed on an upper side and the second electrode 4b is disposed on a lower side.

Hereinafter, a case where a target sample (target biological substance) is a nucleic acid will be described as an example. The target biological substance may be a protein.

### [Embodiment 1]

As shown in (a) of FIG. 2, the electrophoresis device 1 of Embodiment 1 includes a first gel flow path 2, a second gel flow path 3 connected to the first gel flow path 2, a buffer solution tank 5 (solution tank) connected to the first gel flow path 2, the first electrode 4a provided in the buffer solution tank 5, and the second electrode 4b provided in the second gel flow path 3. The first gel flow path 2 and the second gel flow path 3 are precast (filled in advance) with a separation medium (gel) used for separating the target biological substance.

As the gel, for example, a known gel such as an agarose gel or a polyacrylamide gel can be used. In general, an electrophoresis gel is prepared and used immediately before electrophoresis. However, the preparation of the electrophoresis gel requires dissolving the gel in a case of the agarose gel, and requires adjusting a reagent and remove air in a case of the polyacrylamide gel, resulting in large labor. Therefore, in the present embodiment, the preparation of the electrophoresis gel is not required, and a precast agarose gel, polyacrylamide gel, or the like that are prepared in advance and can be immediately electrophoresed is used.

The electrophoresis device 1 includes a buffer solution tank 5 (solution tank) into which a buffer solution into which a sample (target biological substance) that performs electrophoresis in the gel of the first gel flow path 2 is injected is introduced. The first gel flow path 2 is connected to the buffer solution tank 5, and an internal space of the buffer solution tank 5 and an internal space of the first gel flow path 2 are spatially continuously connected. The buffer solution may or may not be precast.

The second gel flow path 3 is connected to the first gel flow path 2, and the internal space of the first gel flow path 2 and an internal space of the second gel flow path 3 are spatially continuously connected. The second gel flow path 3 does not have an opening other than a connection port 3a (see (b) of FIG. 2) with the first gel flow path 2.

The buffer solution tank 5 is provided with the first electrode 4a, and the second gel flow path 3 is provided with the second electrode 4b. The first electrode 4a is a cathode, and the second electrode 4b is an anode.

The second electrode 4b in the second gel flow path 3 is provided at a position different from a position on an axis 2a of the first gel flow path 2. That is, the second electrode 4b in the second gel flow path 3 is provided so as not to overlap the axis 2a of the first gel flow path 2. The axis 2a means a line passing through a center of the first gel flow path 2.

As shown in an enlarged view of the second gel flow path 3 in (b) of FIG. 2, the connection port 3a of the second gel flow path 3 with the first gel flow path 2 is provided at a position different from a position vertically above the second electrode 4b in the second gel flow path 3. That is, the second electrode 4b in the second gel flow path 3 is provided so as not to overlap an opening range 3b on a vertically lower side of the connection port 3a. In the drawings, an X direction and a Y direction indicate horizontal directions, and a Z direction indicates a vertical direction. In the present specification, the X direction may be referred to as a width direction, and the Y direction may be referred to as a depth direction.

Since the second electrode 4b in the second gel flow path 3 is provided at the position different from the position on the axis 2a of the first gel flow path 2, it is possible to prevent air bubbles generated by the second electrode 4b from entering the first gel flow path 2. Accordingly, it is possible to prevent energization of electrophoresis from being hindered by the air bubbles generated by the second electrode 4b.

### [Embodiment 2]

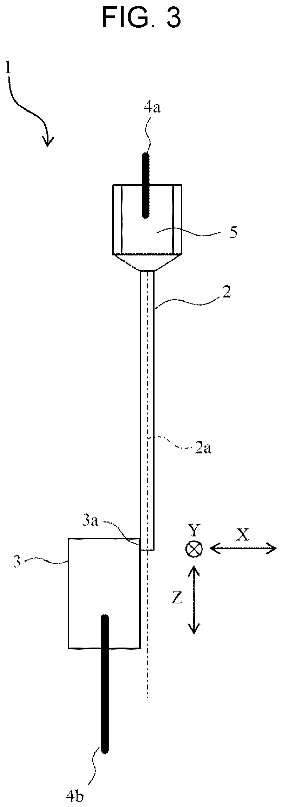

As shown in FIG. 3, similarly to the electrophoresis device 1 of Embodiment 1, the electrophoresis device 1 of Embodiment 2 includes the first gel flow path 2, the second gel flow path 3 connected to the first gel flow path 2, the buffer solution tank 5 (solution tank) connected to the first gel flow path 2, the first electrode 4a provided in the buffer solution tank 5, and the second electrode 4b provided in the second gel flow path 3. Description similar to that of Embodiment 1 will be omitted as appropriate.

In Embodiment 2, the first gel flow path 2 is connected to a side surface of the second gel flow path 3. Also in Embodiment 2, the second electrode 4b in the second gel flow path 3 is provided at a position different from the position on the axis 2a of the first gel flow path 2. Further, in Embodiment 2, the connection port 3a of the second gel flow path 3 with the first gel flow path 2 is open in the width direction (X direction in the drawing).

In Embodiment 2, since the second electrode 4b in the second gel flow path 3 is provided at the position different from the position on the axis 2a of the first gel flow path 2, it is possible to prevent air bubbles generated by the second electrode 4b from entering the first gel flow path 2. Accordingly, it is possible to prevent the energization of the electrophoresis from being hindered by the air bubbles generated by the second electrode 4b.

Further, in Embodiment 2, since the connection port 3a is open in the width direction (X direction in the drawing), as compared with Embodiment 1, the structure makes it difficult for air bubbles to enter the first gel flow path 2.

### [Embodiment 3]

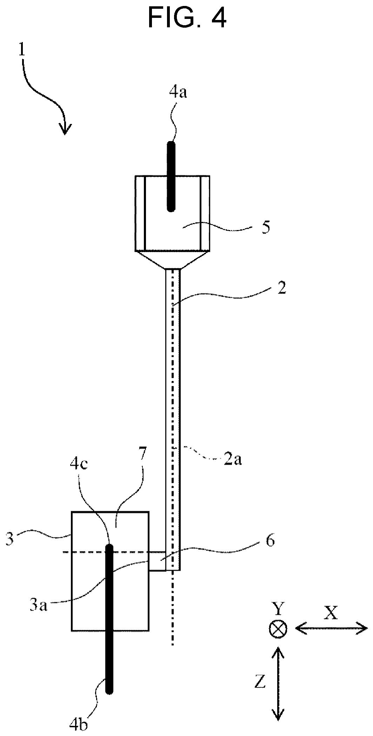

As shown in FIG. 4, similarly to the electrophoresis device 1 of Embodiment 1, the electrophoresis device 1 of Embodiment 3 includes the first gel flow path 2, the second gel flow path 3 connected to the first gel flow path 2, the buffer solution tank 5 (solution tank) connected to the first gel flow path 2, the first electrode 4a provided in the buffer solution tank 5, and the second electrode 4b provided in the second gel flow path 3. Description similar to that of Embodiments 1 and 2 will be omitted as appropriate.

The electrophoresis device 1 of Embodiment 3 includes a connection portion 6 that connects the first gel flow path 2 and the second gel flow path 3. The connection portion 6 is connected to a vicinity of a center of the side surface of the second gel flow path 3 in the vertical direction (Z direction in the drawing). Accordingly, the second gel flow path 3 has a space (here, referred to as a protrusion 7) protruding upward from the connection portion 6 (dotted line in the drawing). The second gel flow path 3 of Embodiment 2 does not have an opening other than the connection port 3a with the connection portion 6.

Further, the second electrode 4b is provided such that a tip end 4c thereof is located above the connection portion 6 (dotted line in the drawing). The second electrode 4b may be provided such that the tip end 4c thereof is located below the connection portion 6.

Since the air bubbles generated by the second electrode 4b are captured by the protrusion 7, the air bubbles generated by the second electrode 4b do not enter the first gel flow path 2 and do not hinder the energization of the electrophoresis.

In addition, since the second electrode 4b is provided such that the tip end 4c thereof is located above the connection portion 6, it is possible to prevent the air bubbles rising from the tip end 4c along the second electrode 4b from entering the connection portion 6.

Other effects are the same as those of Embodiment 1 and Embodiment 2.

### <Orientation of Second Electrode 4b>

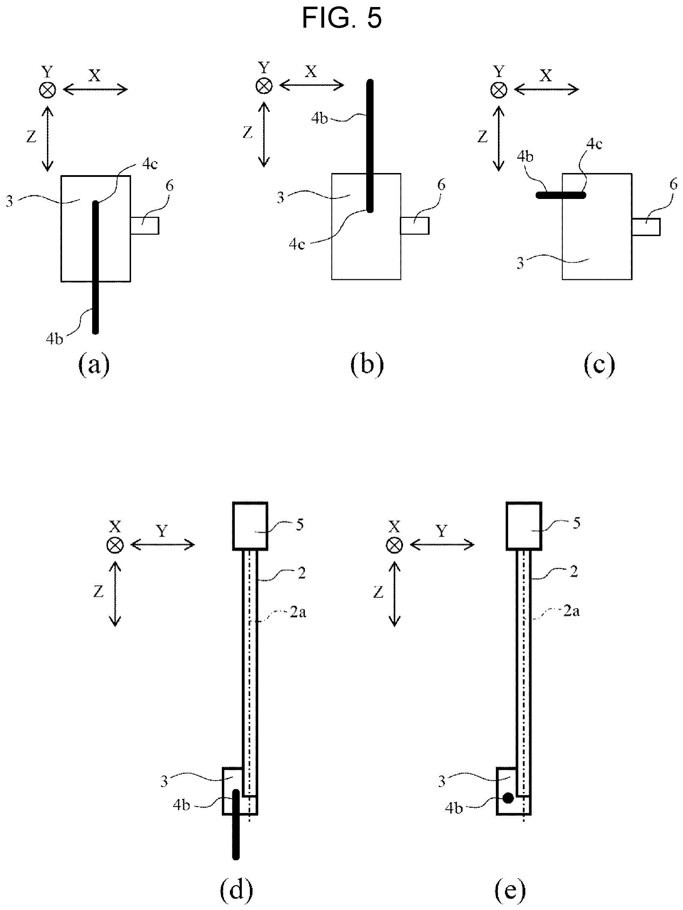

Here, variations of an orientation of the second electrode 4b provided in the second gel flow path 3 will be described. The second electrode 4b is not limited to being provided on the lower side of the second gel flow path 3 (see (a) of FIG. 5), and may be provided on an upper side of the second gel flow path 3 (see (b) of FIG. 5) or in the side surface of the second gel flow path 3 (see (c) of FIG. 5). Further, in the example of (a) to (c) of FIG. 5, the second electrode 4b is provided such that the tip end 4c thereof is located on a buffer solution tank 5 side (upper side) with respect to the connection portion 6.

(d) and (e) of FIG. 5 are side views of the electrophoresis device 1. As shown in (d) and (e) of FIG. 5, the second electrode 4b may be provided at a position different from the position on the axis 2a of the first gel flow path 2 in the depth direction (Y direction in the drawings).

### [Embodiment 4]

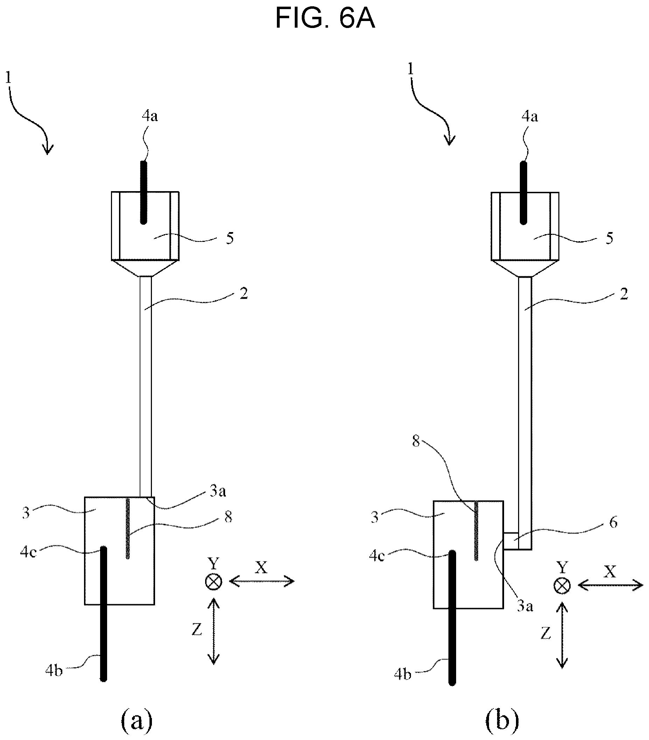

As shown in FIG. 6A, similarly to the electrophoresis device 1 of Embodiment 1, the electrophoresis device 1 of Embodiment 4 includes the first gel flow path 2, the second gel flow path 3 connected to the first gel flow path 2, the buffer solution tank 5 (solution tank) connected to the first gel flow path 2, the first electrode 4a provided in the buffer solution tank 5, and the second electrode 4b provided in the second gel flow path 3. Description similar to that of Embodiments 1 to 3 will be omitted as appropriate.

As shown in (a) of FIG. 6A, the electrophoresis device 1 of Embodiment 4 includes a partition 8 provided between the tip end 4c of the second electrode 4b and the connection port 3a of the second gel flow path 3 with the first gel flow path 2.

As shown in (b) of FIG. 6A, the electrophoresis device 1 of Embodiment 4 includes the partition 8 provided between the tip end 4c of the second electrode 4b and the connection port 3a of the second gel flow path 3 with the connection portion 6.

In Embodiment 4, since the electrophoresis device 1 is provided with the partition 8, a movement of the air bubbles generated by the second electrode 4b is restricted by the partition 8, and thus the air bubbles do not enter the first gel flow path 2 and do not hinder the energization of the electrophoresis. Other effects are the same as those of Embodiment 1.

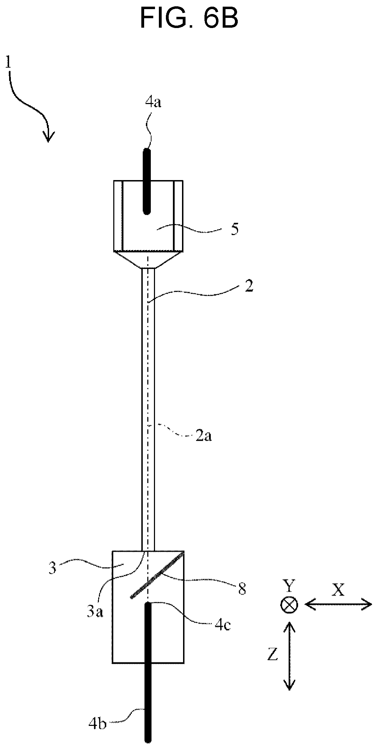

Further, as in a reference example of FIG. 6B, in the configuration in which the second electrode 4b in the second gel flow path 3 is provided so as to coincide with the axis 2a of the first gel flow path 2, the partition 8 may be provided between the tip end 4c of the second electrode 4b and the connection port 3a. The partition 8 is provided obliquely with respect to the vertical direction, so that the raising air bubbles do not rise directly upward.

### [Embodiment 5]

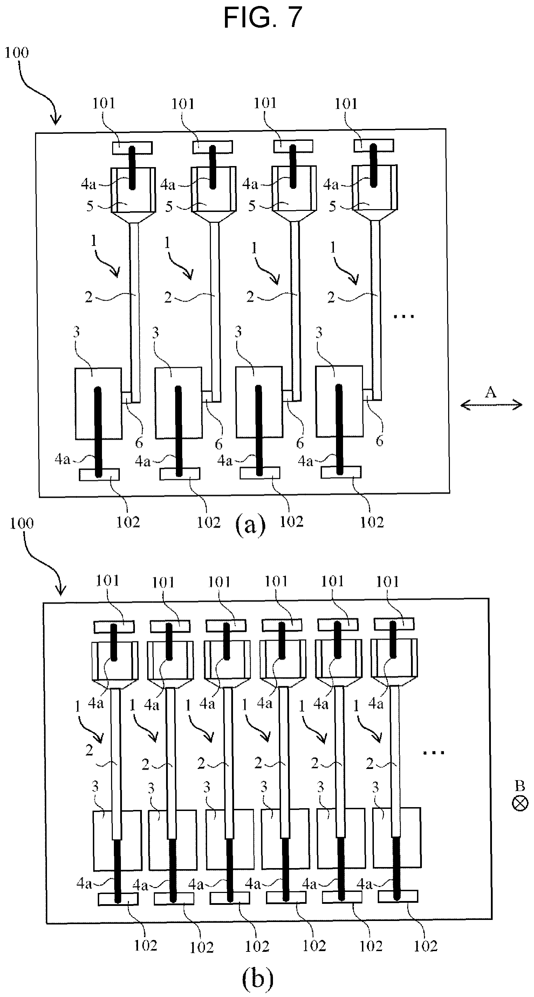

FIG. 7 shows a flow path device 100 in which a plurality of the electrophoresis devices 1 are provided. As shown in FIG. 7, the plurality of the electrophoresis devices 1 are provided in the flow path device 100. The electrophoresis device 1 provided in the flow path device 100 may be any of the electrophoresis devices of Embodiments 1 to 4 described above. In Embodiment 5, the flow path device 100 in which the electrophoresis device 1 including the connection portion 6 of Embodiment 3 is provided will be described. The flow path device 100 includes a power supply pin 101 connected to the first electrode 4a and a power supply pin 102 connected to the second electrode 4b. The flow path device 100 includes a power supply that supplies power to the power supply pins 101 and 102 and a power supply control unit that controls a power supply voltage, and applies a voltage between the first electrode 4a (cathode) and the second electrode 4b (anode).

As shown in (a) of FIG. 7, the plurality of electrophoresis devices 1 may be arranged such that the connection portion 6 and the first gel flow path 2 are provided on an arrangement direction (A direction in the drawing) side of the electrophoresis devices 1 with respect to the second gel flow path 3.

In addition, as shown in (b) of FIG. 7, the plurality of electrophoresis devices 1 may be arranged such that the connection portion 6 and the first gel flow path 2 are provided in a direction (B direction in the drawing) on a front side or a back side with respect to the second gel flow path 3. In the example of (b) of FIG. 7, as compared with (a) of FIG. 7, the flow path device 100 can be made compact by an arrangement space of the connection portion 6 and the first gel flow path 2.

### <Electrophoresis Method>

Next, an electrophoresis method using the above-described electrophoresis device 1 will be described. Here, an electrophoresis method using the electrophoresis device 1 including the connection portion 6 of Embodiment 3 will be described.

First, the above-described electrophoresis device 1 is prepared. For example, as shown in Embodiment 3, the electrophoresis device 1 includes a solution tank (buffer solution tank 5) provided with the first electrode 4a, the first gel flow path 2 connected to the buffer solution tank 5 and filled with a gel, the second gel flow path 3 connected to the first gel flow path 2, filled with a gel, and provided with the second electrode 4b, and the connection portion 6 connected to the side surface of the second gel flow path 3 and connecting the first gel flow path 2 to the second gel flow path 3. A gel is precast in the first gel flow path 2, the second gel flow path 3, and the connection portion 6. Further, the second gel flow path 3 includes the protrusion 7 protruding upward from the connection portion 6.

Next, the buffer solution is put into the buffer solution tank 5, and the sample is injected into the buffer solution put into the buffer solution tank 5.

Finally, a voltage is applied to the first electrode 4a as the cathode and the second electrode 4b as the anode, and the sample is electrophoresed in the gel of the first gel flow path 2.

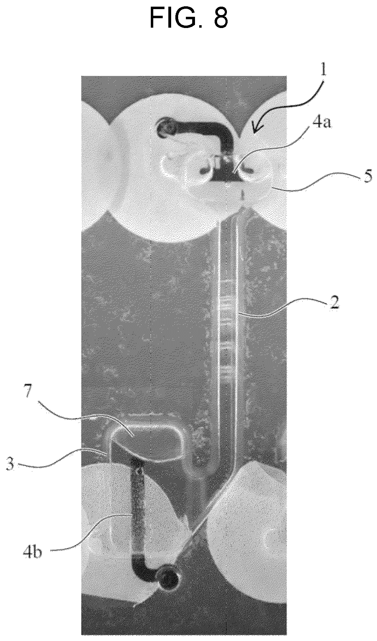

Results of the electrophoresis are shown in FIG. 8. As shown in FIG. 8, it was confirmed that the air bubbles generated by the second electrode 4b were captured by the protrusion 7 and did not enter the first gel flow path 2.

The present disclosure is not limited to the above-described embodiments, and includes various modifications. For example, the embodiments described above are described in detail in order to describe the present disclosure in an easy-to-understand manner, and are not necessarily limited to including all the described configurations. In addition, another configuration can be added to a part of a configuration of each embodiment, and the part of the configuration of each embodiment can be deleted or replaced with another configuration.

For example, in the above-described embodiments, the electrophoresis device 1 in which the gel is precast in the first gel flow path 2 and the second gel flow path 3 is described, but the gel may not be precast.

In the above-described embodiments, the linear electrode 4b is disposed in the second gel flow path 3, but a shape of the electrode 4b is not limited to the linear shape, and may be, for example, a T-shaped electrode.

### Reference Signs List

1: electrophoresis device
2: first gel flow path
2a: axis
3: second gel flow path
3a: connection port
3b: opening range
4a: first electrode
4b: second electrode
4c: tip end
5: buffer solution tank
6: connection portion
7: protrusion
8: partition
100: flow path device
101, 102: power supply pin

## Claims

1. An electrophoresis device used for vertical electrophoresis in which a first electrode as a cathode and a second electrode as an anode are provided and the first electrode is disposed on an upper side and the second electrode is disposed on a lower side, the electrophoresis device comprising:
a solution tank into which a sample is introduced and in which the first electrode is provided;
a first gel flow path configured to be connected to the solution tank and filled with a gel; and
a second gel flow path configured to be connected to the first gel flow path and filled with a gel, the second electrode being provided in the second gel flow path, wherein
the second electrode is provided in the second gel flow path at a position different from a position on an axis of the first gel flow path.

2. The electrophoresis device according to claim 1, wherein
a connection port between the first gel flow path and the second gel flow path is provided at a position different from a position vertically above the second electrode in the second gel flow path.

3. The electrophoresis device according to claim 1, wherein
the first gel flow path is connected to a side surface of the second gel flow path.

4. The electrophoresis device according to claim 1, further comprising:
a partition provided between a tip end of the second electrode and a connection port between the first gel flow path and the second gel flow path.

5. The electrophoresis device according to claim 1, wherein
the gel is precast in the first gel flow path and the second gel flow path.

6. An electrophoresis device used for vertical electrophoresis in which a first electrode as a cathode and a second electrode as an anode are provided and the first electrode is disposed on an upper side and the second electrode is disposed on a lower side, the electrophoresis device comprising:
a solution tank into which a sample is introduced and in which the first electrode is provided;
a first gel flow path configured to be connected to the solution tank and filled with a gel;
a second gel flow path configured to be connected to the first gel flow path and filled with a gel, the second electrode being provided in the second gel flow path; and
a connection portion configured to be connected to a side surface of the second gel flow path and connect the first gel flow path to the second gel flow path, wherein
the second gel flow path includes a protrusion protruding upward from the connection portion.

7. The electrophoresis device according to claim 6, wherein
the second electrode is provided such that a tip end of the second electrode is above the connection portion.

8. The electrophoresis device according to claim 6, further comprising:
a partition provided between a tip end of the second electrode and a connection port between the connection portion and the second gel flow path.

9. The electrophoresis device according to claim 6, wherein
the second gel flow path does not have an opening other than a connection port with the connection portion.

10. An electrophoresis method, comprising:
vertically providing an electrophoresis device such that a first electrode is disposed on an upper side and a second electrode is disposed on a lower side, the electrophoresis device including
a solution tank provided with the first electrode,
a first gel flow path configured to be connected to the solution tank and filled with a gel,
a second gel flow path configured to be connected to the first gel flow path and filled with a gel, the second electrode being provided in the second gel flow path, and
a connection portion configured to be connected to a side surface of the second gel flow path and connect the first gel flow path to the second gel flow path, and
the second gel flow path including a protrusion protruding upward from the connection portion, and the electrophoresis device is vertically provided such that the first electrode is positioned at the top and the second electrode at the bottom;
introducing a sample into the solution tank; and
applying a voltage to the first electrode as a cathode and the second electrode as an anode to cause electrophoresis of the sample in the gel of the first gel flow path.
